**Europäisches Patentamt**

**European Patent Office**

**Office européen des brevets**

(19)

(11) Veröffentlichungsnummer : **0 375 842 B1**

(12) **EUROPÄISCHE PATENTSCHRIFT**

(45) Veröffentlichungstag der Patentschrift :
**03.06.92 Patentblatt 92/23**

(21) Anmeldenummer : **89116905.4**

(22) Anmeldetag : **13.09.89**

(51) Int. Cl.⁵ : **B60N 2/02**

(54) Einrichtung zum Verstellen eines Sitzes in einem Kraftfahrzeug.

(30) Priorität : **21.12.88 DE 3843030**

(43) Veröffentlichungstag der Anmeldung :
**04.07.90 Patentblatt 90/27**

(45) Bekanntmachung des Hinweises auf die
Patenterteilung :
**03.06.92 Patentblatt 92/23**

(84) Benannte Vertragsstaaten :
**DE ES FR GB IT SE**

(56) Entgegenhaltungen :
**DE-A- 3 300 654**
**DE-C- 3 102 402**

(73) Patentinhaber : **ROBERT BOSCH GMBH**
**Postfach 30 02 20**
**W-7000 Stuttgart 30 (DE)**

(72) Erfinder : **Krauth, Marco**
**Hauptstrasse 67**
**W-7573 Sinzheim (DE)**
Erfinder : **Steimel, Uwe**
**Denniweg 36**
**W-7582 Bühlertal (DE)**
Erfinder : **Wiesler, Martin, Dipl.-Ing. (BA)**
**Rebgasse 7**
**W-7570 Baden-Baden-Neuweier (DE)**
Erfinder : **Niklaus, Bernd, Ing. (grad.)**
**Fischerstrasse 10**
**W-7550 Rastatt-Plittersdorf (DE)**
Erfinder : **Weis, Werner, Dipl.-Ing. (FH)**
**Friedenstrasse 4**
**W-7582 Bühlertal (DE)**

EP 0 375 842 B1

Jouve, 18, rue Saint-Denis, 75001 PARIS

## Beschreibung

### Stand der Technik

Die Erfindung geht aus von einer Einrichtung nach der Gattung des Hauptanspruchs. Es ist schon eine solche Verstelleinrichtung bekannt (DE-C 31 02 402), bei der zwischen den beiden Elementen eine Bremseinrichtung und ein dieser zugeordneter Freilauf angeordnet sind, damit es durch das im Übertragungsbereich zwischen den beiden Elementen vorhandene Spiel nicht zu unerwünschten Rattererscheinungen während des Betriebs der Einrichtung kommt. Die bekannte Anordnung ist jedoch recht aufwendig aufgebaut und in montiertem Zustand nicht mehr ein- bzw. nachstellbar.

Auf die geschilderte DE-C 31 02 402 wird hiermit ausdrücklich Bezug genommen, so daß die Offenbarung aus dieser Druckschrift zur Offenbarung der vorliegenden Schutzrechtsanmeldung wird.

### Vorteile der Erfindung

Die erfindungsgemäße Einrichtung mit den kennzeichnenden Merkmalen des Hauptanspruchs hat demgegenüber den Vorteil, daß durch das Verdrehen und der damit verbundenen Lageveränderung der einen Teilmutter auf der Gewindespindel - in bezug auf die andere Teilmutter - einmal das fertigungsbedingte Spiel zwischen Spindel und Gewindemutter beseitig werden kann und darüber hinaus das als Sicherheit gewünschte Verdrehmoment der Spindel eingestellt werden kann. Besonders vorteilhaft ist ferner, daß die Vorrichtung jederzeit auf einfache Weise nachgestellt und den möglicherweise veränderten Voraussetzungen angepaßt werden kann.

Zwar ist es aus der DE-A 33 00 654 bekannt zwei axial gegeneinander verspannte Muttern gegen Verdrehen zu sichern, indem ein exzentrisch gelagerter, radial ausgerichteter Stift in eine von vielen Aussparungen greift, welche an einer ringförmigen Mantelfläche eines Mutternvorsprungs angeordnet sind. Eine Möglichkeit zum Beseitigen des Gewindespiels zwischen den Muttern und der Spindel unter Berücksichtigung eines vorgegebenen Spindel-Verdrehmoment-Grenzwertes ist dort aber nicht vorgesehen.

Durch die in den Unteransprüchen aufgeführten Maßnahmen sind vorteilhafte Weiterbildungen und Verbesserungen der im Hauptanspruch angegebenen Verstelleinrichtung möglich.

### Zeichnung

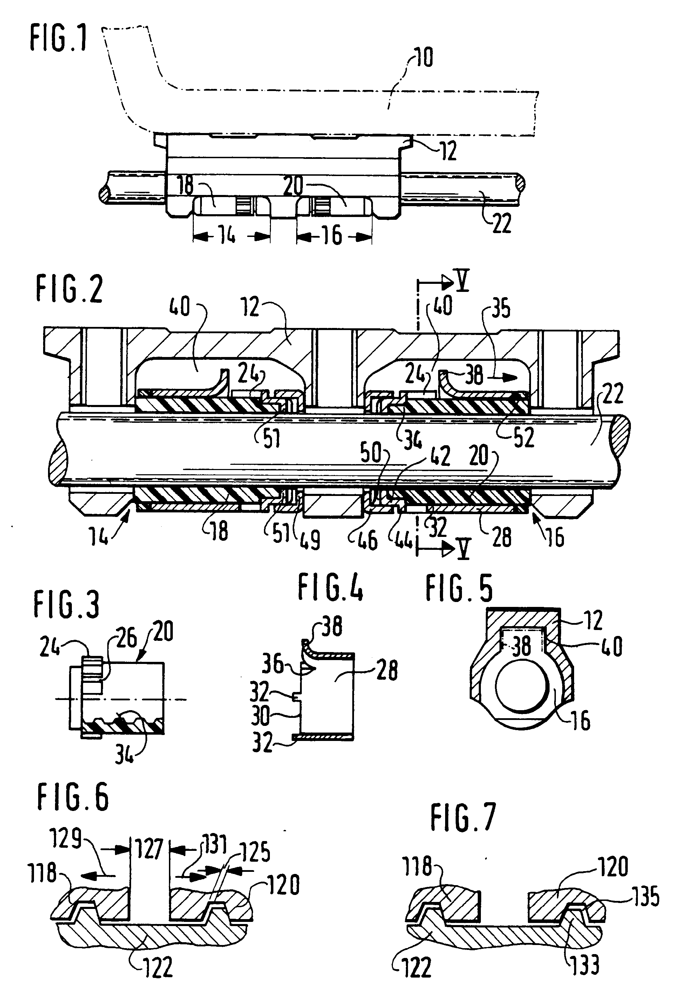

Ein Ausführungsbeispiel der Erfindung ist in der Zeichnung dargestellt und in der nachfolgenden Beschreibung näher erläutert. Es zeigen Figur 1 eine Prinzipdarstellung einer erfindungsgemäßen Stelleinrichtung in Ansicht, Figur 2 ein zur Stelleinrichtung gehörender, betriebsfertig montierter Mutterhalter im Längsschnitt, in vergrößerter Darstellung, Figur 3 eine von zwei im Mutterhalter einsetzbaren Teilmuttern, teilweise geschnitten und gegenüber Figur 2 verkleinert dargestellt, Figur 4 einen Längsschnitt durch eine zur Teilmutter gemäß Figur 3 gehörende Sicherungshülse, Figur 5 einen Querschnitt entlang der Linie V-V in Figur 2, durch den unmontierten Mutterhalter, in einem gegenüber Figur 2 verkleinerten Maßstab, Figur 6 eine vergrößerte Prinzip-Teildarstellung der in den Teilmuttern montierten Spindel, in einer sich ergebenden Montagestellung im Schnitt und Figur 7 die Anordnung gemäß Figur 6 in der erforderlichen Betriebsstellung.

### Beschreibung des Ausführungsbeispiels

Ein in Figur 1 strichpunktiert dargestelltes Gestell 10 des Sitzes eines Kraftfahrzeuges ist fest mit einem Mutterhalter 12 verbunden. Der Mutterträger 12 hat zwei Kammern 14 und 16 zur Aufnahme jeweils einer Teilmutter 18, 20. Die beiden Teilmuttern 18 und 20 arbeiten mit einer Gewindespindel 22 zusammen, welche den Mutterhalter 12 in Längsrichtung durchsetzt. Mit der dargestellten Anordnung ist der Sitz in Längsrichtung des Fahrzeugs verstellbar. Die im folgenden näher beschriebene Verstelleinrichtung ist sinngemäß beispielsweise auch für eine sogenannte Sitz-Höhenverstellung verwendbar. Die beiden Teilmuttern 18 und 20 können, da sie hinsichtlich der Spindel 22 völlig gleichartig sind, in ihrer Gesamtheit als eine einzige Mutter bezeichnet werden.

Wie Figur 2 zeigt, sind die beiden Teilmuttern 18 und 20 gleichartig ausgebildet. Ihre Anordnung in den beiden Kammern 14 und 16 ist jedoch gegeneinander gerichtet. Die weitere Anordnung und Ausgestaltung der beiden Teilmuttern 18 und 20 in ihren Kammern 14 und 16 soll anhand der in der Kammer 16 angeordneten Teilmutter 20 erfolgen. Diese Teilmutter, und eine zu dieser gehörenden Hülse, sind in den Figuren 3 und 4 als Einzelteile dargestellt. Die Teilmutter 20 ist aus einem Kunststoff hergestellt. Sie hat einen hülsenartigen Aufbau, der an seinem Umfang mit einem Ringbund 24 versehen ist. Der Ringbund ist von einer Anzahl Längsnuten 26 durchsetzt, so daß sich Ansetzstellen für ein Werkzeug zum Drehen der Teilmutter ergeben. Auf den Außendurchmesser der Teilmutter 20 ist eine Hülse 28 abgestimmt, die sich demzufolge über diese schieben läßt, bis sie am Ringbund 24 anschlägt. Die Hülse 28 weist als Formprofil an ihrer einen Stirnringfläche 30 mehrere in Verschieberichtung gerichtete Zähne 32 auf, die bei entsprechender Ausrichtung der Hülse 28 in die Nuten 26 des Ringbundes 24 eingreifen, welche somit ein Gegenprofil bilden. An ihrer von der Hülse 28 abgewandten Stirnseite ist die Teilmutter 20 mit einem Ansatz 34 versehen, dessen Durchmesser kleiner ist als der Innendurchmesser der Hülse 28 bzw. der dieser zugeordnete Außendurchmesser der Teilmutter 20. Weiter weist die Hülse 28 an ihrem Umfang zwei Einscherungen 36 auf, so daß sich ein Lappen 38 ergibt, welcher in einem Winkel von etwa 90 Grad zur Hülsen-Längsachse aus der Mantelfläche der Hülse 28 nach außen herausgebogen ist. Dieser Lappen 38 greift in montiertem Zustand von Teilmutter 20 und Hülse 28 in eine nutartige Ausnehmung 40, welche sich von der Kammer 16 aus in den Körper des Mutterhalters 12 erstreckt. Der Lappen 38 bildet somit eine Verdrehsicherung der Hülse 28 (Figur 5). Wie Figur 2 weiter zeigt, sitzt auf dem Ansatz 34 der Teilmutter 20 eine Ringkappe 42, die einen zentralen Durchbruch für die Gewindespindel 22 aufweist. Die Ringkappe 42 weist einen nach außen gerichteten Ringrand 44 auf, der bei montierter Ringkappe 42 am Ringbund 24 der Teilmutter 20 zur Anlage kommt. Auf die Ringkappe 42 ist eine topfförmige, zweite Kappe 46 gestülpt, deren Topfrand 48 am Ringbund 44 der ersten Kappe 42 zur Anlage kommt, bevor der Topfboden 49 der zweiten Kappe 46 an dem Boden 51 der ersten Kappe 42

zur Anlage kommt. Somit wird also die Relativbewegung zwischen den beiden Kappen 42 und 46 begrenzt. Es ergibt sich somit ein ringförmiger Raum zwischen dem Boden 49 der zweiten Kappe 46 und der ersten Kappe 42. In diesem Ringraum ist eine sogenannte Wellfeder 50 angeordnet, welche die Spindel 22 umgibt. Auch im Topfboden 49 der zweiten Kappe 46 befindet sich eine Bohrung, durch welche die Spindel 22 hindurchgeführt ist. Die Abstimmung zwischen der Kammer 16 einerseits und der Teilmutter 20 sowie den beiden Kappen 42 und 46 ist so getroffen, daß diese Teile mit einer geringen Vorspannung in die Kammer 16 eingesetzt werden können. Diese Vorspannung wird von der etwas gespannten Wellfeder 50 verursacht.

Figur 2 zeigt weiter, daß die Längserstreckung der Hülse 28 etwas kleiner ist als die Längserstreckung der Teilmutter 20 in dem Bereich, der von der Hülse 28 übergriffen wird, wenn diese an den ihr zugewandten Seitenkanten des Ringbundes 24 zur Anlage kommt. Dieser Sachverhalt ist insbesondere in Figur 2 zu sehen, wo die eben beschriebene Position der Hülse zur Teilmutter 20 dargestellt ist.

Um die Hülse in bezug auf die Teilmutter 20 zu fixieren, ist auf der von dem Ringbund 24 abgewandten Seite die Teilmutter 20 von einem ringförmigen Sicherungselement 52 umfangen, welches eine Achsialbewegung der Hülse 28 verhindert. Die Montage des Sicherungselements 52 wird dadurch ermöglicht, daß der Ring 52 eine Trennfuge aufweist, welche ein Aufbiegen des aus einem elastischen Material gefertigten Sicherungselements 52 gestattet. Der Sicherungsring 52 kann also ohne Schwierigkeiten aus der in Figur 2 dargestellten Lage entfernt werden, so daß ein Verschieben der Hülse 28 auf der Teilmutter 20 möglich wird.

Die eben beschriebene Anordnung bezüglich der Teilmutter 20 und der Kammer 16 ist sinngemäß bei der in der Kammer 14 angeordneten Teilmutter 18 realisiert, so daß auch die im folgenden beschriebene Einstellung der Gewindemutter 18, 20 sowohl an der Teilmutter 18 als auch an der Teilmutter 20 vorgenommen werden kann.

Das Prinzip dieser Anordnung sei insbesondere anhand der Figuren 6 und 7 erläutert. Dort ist die Spindel 22 mit 122 bezeichnet worden, während die beiden Teilmuttern 18 und 20 die Bezugszahlen 118 und 120 erhalten haben. Schließlich wird auch darauf hingewiesen, daß, der besseren Übersichtlichkeit wegen, einige Bezugszahlen der oben beschriebenen Anordnung der Teilmutter 20 in ihrer Kammer 16 der anderen Teilmutter 18 bzw. der zu dieser gehörenden Kammer 14 zugeordnet worden sind. Unklarheiten dürften sich daraus deshalb nicht ergeben, weil die Montageanordnung und die Ausgestaltung der beiden Teilmuttern 18 und 20 völlig gleich ist.

In Figur 6 ist dargestellt, wie die Spindel 122 in bezug auf die beiden Teilmuttern 118 und 120 angeordnet ist. So ist erkennbar, daß sich im Gewinde ein durch Fertigungstoleranzen bedingtes Längsspiel 125 der Spindel 122 in der Mutter 118, 120 vorhanden ist. Dieses Längsspiel 125 ist Ursache für die eingangs geschilderten, unerwünschten Rattererscheinungen beim Verstellen des Fahrzeugsitzes. Um dieses Längsspiel 125 zu eliminieren, muß der zwischen den beiden Teilmuttern 118, 120 vorhandene Abstand 127 um die Größe des Spiels 125 vergrößert werden; d. h., daß die Teilmutter 118 in Richtung des Pfeiles 129 und/oder die Teilmutter 120 in Richtung des Pfeiles 131 bewegt werden müssen. Diese Maßnahme ist im folgenden anhand von Figur 2 näher erläutert. Zunächst wird der Sicherungsring 52 aus seiner in Figur 2 gezeigten Montagestellung entfernt. Danach wird die Hülse 28 in Richtung des Pfeiles 35 geschoben, so daß die Zähne 32 aus ihren Nuten 26 des Ringbundes 24 gelangen. Es ist also der Verschiebeweg der Hülse 28 größer als die Profiltiefe der Hülse in Verschieberichtung gemessen. Danach kann die Teilmutter 20 unter Zuhilfenahme eines in die Nuten 26 greifenden Werkzeuges so lange gedreht werden, bis das Längsspiel 125 zwischen der Flanke des Gewindezahnes 133 und der diesem zugewandten Flanke der Gewindenut 135 aufgehoben ist. Die Drehrichtung der Teilmutter 120 erfolgt dabei zweckmäßigerweise so, daß die Wellfeder 50 gespannt wird. Durch Drehen der Teilmutter 20 kann natürlich auch die Spannung in einer Weise eingestellt werden, daß ein vorbestimmtes Verdrehmoment der Spindel in ihrer Gewindemutter 18, 20 erreicht wird. Ein Zusammendrücken der Wellfeder 50 auf Blockhöhe ist aber ausgeschlossen, weil zuvor der Ringbund 44 der Kappe 42 an dem ihm zugewandten Topfrand der zweiten Kappe 46 zur Anlage kommt. Nach Erreichen der vorgeschriebenen Vorspannung bzw. des vorgeschriebenen Verdrehmoments wird die Hülse 28 entgegen dem Pfeil 35 in ihre in Figur 2 dargestellte Montagestellung zurückgebracht. Dabei greifen die Zähne 32 wieder in die ihnen zugeordneten Nuten 26 des Ringbundes 24 der Teilmutter 20. Danach wird der Sicherungsring 22 unter elastischer Aufweitung wieder in seine in Figur 2 dargestellte Position gebracht, so daß ein Verschieben der Hülse 28 in Richtung des Pfeiles 35 unmöglich wird. Ein Verdrehen der Hülse 28 im Mutterhalter wird durch den Lappen 38 verhindert, welcher in Zusammenwirken mit der nutartigen Ausnehmung 40 eine Verdrehsicherung für die Hülse 28 bildet.

Aus dem oben Gesagten ist klar ersichtlich, daß die beschriebene Stelleinrichtung als Abtriebselement die Gewindespindel 22 aufweist, die mit der als Gegenelement wirkenden Gewindemutter 18, 20 zusammenarbeitet. Bezüglich des Fahrzeugsitzes ist die Gewindemutter 18, 20 fest angeordnet. Es ist zwar eine geringfügige Lageveränderung der Teilmuttern 18 und 20 in ihren Kammern 14 und 16 möglich, doch bewegt sich diese Verschiebung im Rahmen dessen, was die Fertigungstoleranzen der miteinander zusammenwirkenden Gewindegänge von Spindel 22 und Mutter 18, 20 erlauben. Dies macht in der Praxis allenfalls 0,1 bis 0,3 mm aus, was keinesfalls als Lageveränderung im üblichen Sinne bezeichnet werden kann. Beim vorliegenden Ausführungsbeispiel ist die Gewindemutter 18, 20 aus zwei Teilmuttern gebildet, so daß sich zwei Mutternabschnitte ergeben. Aus vorstehendem ist weiter ersichtlich, daß zur Aufhebung des Längsspiels 125 ein Mutternabschnitt bezüglich eines anderen Mutternabschnitts lageveränderbar und festsetzbar ausgebildet ist.

## Patentansprüche

1. Einrichtung zum Verstellen eines Sitzes (10) in einem Kraftfahrzeug mit einem motorisch betätigbaren Stellantrieb, dessen Abtriebselement (22) mit einem mit dem Sitz (10) festverbundenen Gegenelement (18, 20) zusammenwirkt und mit einer Vorrichtung zum Verhindern von unkontrollierten Bewegungen zwischen dem Abtriebselement (22) und dem Gegenelement (18, 20), welche durch das zwischen den beiden Elementen vorhandene Spiel bedingt sind, dadurch gekennzeichnet, daß das Abtriebselement als Gewindespindel (22) ausgebildet ist, die mit einer als Gegenelement wirkenden Gewindemutter (18 bzw. 20) zusammenarbeitet und daß die Gewindemutter (18, 20) zwei Mutternabschnitte bildende Teilmuttern (18, 20) aufweist, von denen wenigstens eine Teilmutter (20 bzw. 18) unabhängig von der anderen Teilmutter (18 bzw. 20) auf der Spindel (22) drehbar und bezüglich dieser Spindel und der anderen Teilmutter (20 bzw. 18) festsetzbar ist.

2. Einrichtung nach Anspruch 1, dadurch gekennzeichnet, daß beide Teilmuttern (18, 20) auf der Spindel (22) drehbar und bezüglich der Spindel ünd der jeweils anderen Teilmütter (18,20) festsetzbar sind.

3. Einrichtung nach einem der Ansprüche 1 oder 2, dadurch gekennzeichnet, daß jede Teilmutter (18 bzw. 20) in einer ihr zugeordneten Kammer (14 bzw. 16) eines mit dem Fahrzeugsitz (10) verbundenen Halteelements (12) angeordnet ist.

4. Einrichtung nach Anspruch 3, dadurch gekennzeichnet, daß zumindest eine Teilmutter (18 bzw. 20) in einer Hülse (28) drehbar gelagert ist, die in der Kammer (14 bzw. 16) drehsicher angeordnet und in Richtung ihrer Achse verschiebbar ist.

5. Einrichtung nach Anspruch 4, dadurch gekennzeichnet, daß in Achsrichtung gesehen die Hülse (28) kürzer ist als die Teilmutter (18 bzw. 20) und daß die Hülse (28) an ihrer einen Stirnseite ein Formprofil (32) aufweist, das mit einem Gegenprofil (26) in Eingriff bringbar ist, welches an einem Ringbund (24) der Teilmutter (18 bzw. 20) angeordnet ist.

6. Einrichtung nach einem der Ansprüche 4 oder 5, dadurch gekennzeichnet, daß der Verschiebeweg der Hülse (28) gegenüber der Teilmutter (18 bzw. 20) größer ist als die Profiltiefe an der Hülse (28) in Verschieberichtung (Pfeil 55) gemessen.

7. Einrichtung nach einem der Ansprüche 5 oder 6, dadurch gekennzeichnet, daß auf der vom Formprofil (32) der Hülse (28) abgewandten Stirnseite ein den Verschiebeweg begrenzendes Sicherungselement (52) angeordnet ist.

8. Einrichtung nach einem der Ansprüche 3 bis 7, dadurch gekennzeichnet, daß die Teilmutter (18 bzw. 20) in ihrer Kammer (14 bzw. 16) in Achsrichtung gegen Federkraft lageveränderbar ist.

9. Einrichtung nach Anspruch 8, dadurch gekennzeichnet, daß zwischen der einen Stirnseite der Teilmutter (18 bzw. 20) und der dieser zugewandten Rammerwand ein Federelement, vorzugsweise eine Wellfeder (50) angeordnet ist.

10. Einrichtung nach Anspruch 9, dadurch gekennzeichnet, daß die Wellfeder (50) zwischen der Außenseite einer auf die Teilmutter (18 bzw. 20) aufgesetzten ersten Ringkappe (42) und einer dieser zugewandten Innenseite einer zweiten Ringkappe (46) angeordnet ist.

11. Einrichtung nach Anspruch 10, dadurch gekennzeichnet, daß die zweite Ringkappe (46) auf die erste Ringkappe (42) aufgesetzt ist und daß die erste Ringkappe (42) einen Ringbund (44) zum Begrenzen der Relativbewegung zwischen den beiden Ringkappen aufweist.

## Claims

1. Device for the adjustment of a seat (10) in a motor vehicle having a motor-operated actuating drive, the power take-off element (22) of which interacts with a counter-element (18, 20) fixed to the seat (10) and having a device for the prevention of uncontrolled movements between the power take-off element (22) and the counter-element (18, 20) caused by the play present between the two elements, characterised in that the power take-off element is configured as a threaded spindle (22), which interacts with a threaded nut (18 or 20) acting as a counter-element, and in that the threaded nut (18, 20) exhibits two part nuts (18, 20) forming nut sections, of which at least one part nut (20 or 18), independently from the other part nut (18 or 20), can be rotated on the spindle (22) and can be secured relative to this spindle and to the other part nut (20 or 18).

2. Device according to Claim 1, characterised in that both part nuts (18, 20) can be rotated on the spindle (22) and can be secured relative to this spindle and to the other respective part nut (18, 20).

3. Device according to one of Claims 1 or 2, characterised in that each part nut (18 or 20) is disposed in its assigned chamber (14 or 16) of a holding element (12) connected to the vehicle seat (10).

4. Device according to Claim 3, characterised in that at least one part nut (18 or 20) is rotatably mounted in a sleeve (28) which is non-rotatably disposed in the chamber (14 or 16) and is displaceable in the direction of its axis.

5. Device according to Claim 4, characterised in that, viewed in an axial direction, the sleeve (28) is shorter than the part nut (18 or 20) and in that the sleeve (28) exhibits on its one face a moulded profile (32), which can be engaged with a counter-profile (26) disposed on a ring collar (24) of the part nut (18 or 20).

6. Device according to one of Claims 4 or 5, characterised in that the path of displacement of the sleeve (28) relative to the part nut (18 or 20) is greater than the depth of profile on the sleeve (28) measured in the direction of displacement (arrow 55).

7. Device according to one of Claims 5 or 6, characterised in that on the face directed away from the moulded profile (32) of the sleeve (28) there is disposed a securing element (52) limiting the path of displacement.

8. Device according to one of Claims 3 to 7, characterised in that the part nut (18 or 20) can be repositioned in its chamber (14 or 16) in an axial direction against spring force.

9. Device according to Claim 8, characterised in that between the one face of the part nut (18 or 20) and the chamber wall facing the latter there is disposed a spring element, preferably a sinuous spring (50).

10. Device according to Claim 9, characterised in that the sinuous spring (50) is disposed between the outerside of a first ring cap (42) mounted onto the part nut (18 or 20) and an innerside, facing this ring cap, of a second ring cap (46).

11. Device according to Claim 10, characterised in that the second ring cap (46) is mounted onto the first ring cap (42) and in that the first ring cap (42) exhibits a ring collar (44) for limiting the relative movement between the two ring caps.

## Revendications

1. Dispositif de réglage d'un siège (10) dans un véhicule automobile avec une commande du réglage actionnée par moteur, dont l'élément du mouvement (22) coopère avec un élément antagoniste (18, 20) lié fixement au siège (10) et avec un dispositif pour empêcher des mouvements incontrôlés entre l'élément du mouvement (22) et l'élément antagoniste (18, 20), mouvements qui sont dûs au jeu existant entre les deux éléments, dispositif caractérisé en ce que l'élément du mouvement est une tige filetée (22), qui coopère avec un écrou fileté (18 ou 20) agissant comme élément antagoniste et en ce que l'écrou fileté (18, 20) comporte deux écrous partiels formant des segments et écrous, parmi lesquels au moins un écrou partiel (20 ou 18) peut tourner sur la tige (22) indépendamment de l'autre écrou partiel (18 ou 20) et peut être immobilisée par rapport à cette tige et à l'autre écrou partiel (20 ou 18).

2. Dispositif selon la revendication 1, caractérisé en ce que les deux écrous partiels (18, 20) peuvent tourner sur la tige (22) et peuvent être immobilisés par rapport à la tige et à l'autre écrou partiel respectif (18, 20).

3. Dispositif selon une des revendications 1 ou 2, caractérisé en ce que chaque écrou partiel (18 ou 20) est placé dans un logement (14 ou 16) attribué à lui d'un élément de support (12) fixé au siège (10) du véhicule.

4. Dispositif selon la revendication 3, caractérisé en ce qu'au moins un écrou partiel (18 ou 20) est monté mobile en rotation dans un manchon (28), qui lui est placé dans le logement (14 ou 18) sans rotation possible mais peut coulisser dans le sens de l'axe.

5. Dispositif selon la revendication 4, caractérisé en ce que, vu dans le sens de l'axe, le manchon (28) est plus court que l'écrou partiel (18 ou 20) et en ce que le manchon (28) a sur une de ses faces un profil de forme (32), qui peut être amené en prise avec un profil antagoniste (26), disposé sur un collet annulaire (24) de l'écrou partiel (18 ou 20).

6. Dispositif selon une des revendications 4 ou 5, caractérisé en ce que la voie de coulissement du manchon (28) vis-à-vis de l'écrou partiel (18 ou 20) est plus grande que l'étendue profilée du manchon (28) dans le sens de coulissement (flèche 55).

7. Dispositif selon une des revendications 5 ou 6, caractérisé en ce que sur le côté frontal éloigné du profil de forme (32) du manchon (28) existe un élément de sécurité (52) limitant la voie de coulissement.

8. Dispositif selon une des revendications 3 à 7, caractérisé en ce que l'écrou partiel (18 ou 20) dans son logement (14 ou 16) est modifiable en position dans le sens de l'axe contre la force d'un ressort.

9. Dispositif selon la revendication 8, caractérisé en ce qu'entre l'une des faces frontales de l'écrou partiel (18 ou 20) et la paroi du logement tournée vers celle-ci est disposé un élément de ressort, de préférence un ressort spiral (50).

10. Dispositif selon la revendication 9, caractérisé en ce que le ressort spiral (50) est placé entre la face extérieure d'une première chape annulaire (42) appliquée sur l'écrou partiel (18 ou 20) et une face intérieure tournée vers celle-ci d'une deuxième chape annulaire (46).

11. Dispositif selon la revendication 10, caractérisé en ce que la deuxième chape annulaire (46) est emboîtée sur la première chape annulaire (42) et en ce que la première chape annulaire (42) comporte une collerette annulaire (44) pour limiter le déplacement relatif entre les deux chapes annulaires.

FIG.1

FIG.2

FIG.3

FIG.4

FIG.5

FIG.6

FIG.7